# EUROPÄISCHE PATENTANMELDUNG

(11) **EP 2 354 716 A1**
(43) Veröffentlichungstag der Anmeldung: **10.08.2011**
(21) Anmeldenummer: 10152521.0
(22) Anmeldetag: 03.02.2010
(51) Int. Cl.: F24J 2/10, B32B 17/06, B32B 17/10, G02B 5/08

(54) **Spiegel für solarthermische Kraftwerke enthaltend weichmacherhaltige Polyvinylacetalfolien**

(71) Anmelder: Kuraray Europe GmbH, 65926 Frankfurt am Main (DE)
(72) Erfinder: keller, Uwe, 53177 Bonn (DE); Steuer, Martin, 65835 Liederbach (DE)
(74) Vertreter: Kisters, Michael Marcus

(57) **Zusammenfassung**

Die Erfindung betrifft die Verwendung von weichmacherhaltigen, auf Polyvinylacetal basierenden Folien mit einem Polyvinylalkoholanteil im Polyvinylacetal von weniger als 20 Gew.-% zur Herstellung von Spiegel für solarthermische Kraftwerke.

## Beschreibung

### Technisches Gebiet

Die Erfindung betrifft die Herstellung von Spiegelsystemen für solarthermische Kraftwerke unter Verwendung von weichmacherhaltigen Folien auf Basis von Polyvinylacetal.

### Stand der Technik

Solarthermische Kraftwerke setzen zur Konzentration des Sonnenlichts große Spiegelflächen ein. Diese Spiegelsysteme bestehen in der Regel aus einer transparenten vorderen Abdeckung und einem transparenten oder nicht-transparenten rückwärtigen Träger, wobei auf der vorderen Abdeckung oder dem rückwärtigen Träger eine das Sonnenlicht möglichst gut reflektierende Schicht aufgebracht ist. Abdeckung und Träger werden dann mit einem Klebesystem verbunden.

Als Klebesystem für solche Spiegel werden z.B. EthylenVinylacetat (EVA), Silikon oder weichmacherhaltiges Polyvinylbutyral (PVB) verwendet. So beschreibt WO 2007/108861 oder US 4511618 die Herstellung von planaren oder gebogenen (paraboloiden) Spiegelsystemen für Solarthermikkraftwerke, wobei eine verspiegelte und eine unverspiegelte Glasscheibe mittels einer PVB-Folie miteinander verklebt werden. Die Eigenschaften der PVB-Folien sind nicht näher beschrieben.

### Aufgabe

Klebefolien für die Anwendung in Spiegeln für solarthermische Kraftwerke müssen die folgenden Eigenschaften besitzen:
- hohe Haftung
- geringe Korrosivität zu den Spiegelmaterialien
- hohe Kantenstabilität d.h. keine Trübung oder Delamination durch eindringende Feuchtigkeit an den offenen Kanten oder Delamination durch mit der Zeit verdunsteten Weichmacher
- hohe UV-Stabilität (Langzeitverhalten)
- ausreichende thermische Stabilität
- niedrige Kriechneigung auch bei erhöhten Temperaturen
- hohe Dimensionsstabilität
- gleichmäßiges Dickenprofil
- gute Verarbeitbarkeit
- niedrige Herstellungskosten

Es wurde gefunden, dass mit einer weichmacherhaltigen Folie auf Basis von Polyvinylacetal mit einem niedrigen Restgehalt an Polyvinylalkohol diese Anforderungen in einem guten Kompromiss erfüllt werden können.

Insbesondere wurde gefunden daß die Kriechneigung einer solchen weichmacherhaltige Folie unter Temperaturbelastung maßgeblich von dessen Polyvinylalkoholgehalt, Molgewicht, Vernetzungsgrad oder den Acetalisierungsbedingungen bei der Herstellung abhängt.

### Darstellung der Erfindung

Gegenstand der vorliegenden Erfindung sind daher Spiegel für solarthermische Kraftwerke, umfassend ein Laminat aus
a) einer transparenten Frontabdeckung
b) einer oder mehreren das Sonnenlicht reflektierenden Schichten
c) mindestens einer weichmacherhaltigen, auf Polyvinylacetal basierenden Folie und
d) einer rückwärtigen Abdeckung, wobei die weichmacherhaltige, auf Polyvinylacetal basierende Folie c) Polyvinylacetal mit einem Polyvinylalkoholanteil von weniger als 20 Gew.% enthält.

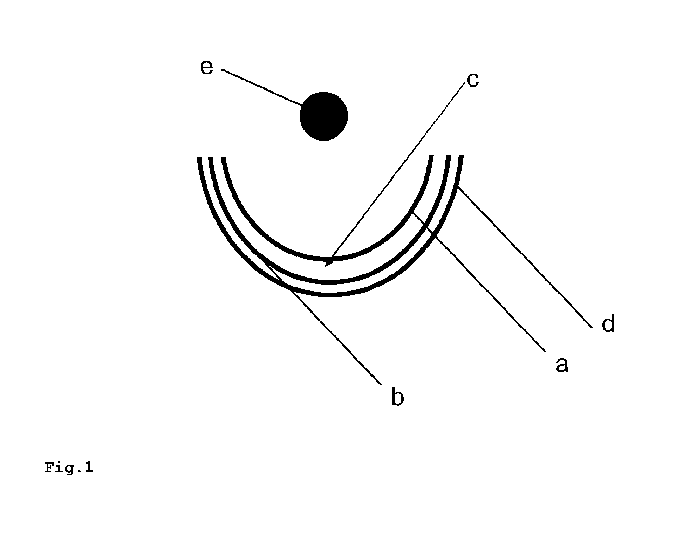

Fig. 1 zeigt einen schematischen Aufbau eines erfindungsgemäßen Spiegelsystems, wobei die Bezugszeichen die anspruchsgemäßen Bedeutungen haben.

In hier gezeigtem Fall ist die reflektierende Schicht (b) auf die rückwärtige Abdeckung (d) aufgebracht und mit der transparenten Frontabdeckung (a) über die Schicht (c) verklebt. Die gezeigte Anordnung findet in einem Linienkonzentrator Anwendung, wobei die von oben einfallende Sonnenstrahlung auf einen mit (e) bezeichneten Punkt konzentriert wird. Die Abfuhr der Wärme in Punkt (e) kann durch Röhren mit einem entsprechenden fluiden Wärmeträger erfolgen.

In einer ersten Variante der Erfindung besitzt die Folie c) in der im folgenden genauer beschriebenen Messmethode eine Kriechneigung, bestimmt an einem Laminat mit dem Aufbau 3 mm planarem Floatglas/ 0,76 mm Folie c) / 3 mm Floatglas, bei einer Temperatur von 100°C nach 7 Tagen von weniger als 5 mm.

Besonders bevorzugt kann die Kriechneigung der weichmacherhaltigen, auf Polyvinylacetal basierende Folie c) weniger als 3 mm, vorzugsweise weniger als 2 mm und am meisten bevorzugt weniger als 1 mm sein.

Alternativ zur Messung der Kriecheigenschaften kann auch der Schmelzflussindex zur Charakterisierung der Folie verwendet werden. So liegt der MFR (100 °C, 21,6 kg) der erfindungsgemäß verwendeten Folie bevorzugt unter 340 mg/10 min, besonders bevorzugt unter 280 mg/10 min, jeweils mit einer Untergrenze von 100 mg/10 min.

Durch den niedrigen Polyvinylalkoholgehalt können Weichmacher niedriger Polarität in relativ großer Menge verwendet werden, was die Feuchteresistenz der Folien weiter verbessert, ohne jedoch die Kriechneigung der Folie über Gebühr zu erhöhen. Hierbei wirkt sich ein ausreichend niedriger Polyvinylalkoholgehalt nicht nur direkt auf die Feuchteaufnahme der Folie aus, sondern ist zugleich Vorraussetzung dafür, dass stark unpolare Weichmacher eine gute Verträglichkeit zum Polyvinylacetal aufweisen. Durch die Wahl eines solchen Weichmachers kann ein zusätzlicher Beitrag zur Reduzierung der Feuchteaufnahme der Folie erhalten werden. Eine niedrige Feuchteaufnahme wirkt sich in einer geringen Korrosivität der Folie gegenüber dem Spiegelmaterial b) aus.

Aus diesem Grund werden für erfindungsgemäß eingesetzte Folien Polyvinylacetale mit Polyvinylalkoholgehalten kleiner 20,0 Gew.-% verwendet. Die erfindungsgemäß verwendeten Polyvinylacetale besitzen bevorzugt einen Polyvinylalkoholanteil von weniger als 18 Gew.%, besonders bevorzugt weniger als 17 Gew.% und insbesondere weniger als 16 Gew.%. Ein Polyvinylalkoholanteil von 12 Gew.% sollte nicht unterschritten werden.

Erfindungsgemäß verwendete Folien können ein oder mehrere Polyvinylacetale enthalten, solange der makroskopisch bestimmte Polyvinylalkoholgehalt in dem gesamten Bereich liegt. Da es bei den erfindungsgemäß verwendeten Folien je nach Aufbau des Spiegelsystems nicht auf optische Qualität ankommt, können auch Polyvinylacetale z.B. aus Recyclingprozessen von Verbundglaslaminaten oder Automobil-Windschutzscheiben, farbige oder trübe Chargen eingesetzt werden.

In einer zweiten Variante der Erfindung werden zur Herstellung der erfindungsgemäßen Folien Polyvinylacetale eingesetzt, deren Gewichtsmittel des Molekulargewichts Mw größer 110000 g/mol, bevorzugt Mw größer als 120000 g/mol und/oder deren Lösungsviskosität größer 80 mPas, bevorzugt größer 90 mPas ist. Der Polyvinylalkoholanteil des eingesetzten Polyvinylacetals muss natürlich in dem o.g. Bereich liegen. Das Molekulargewicht Mw bzw. die Lösungsviskosität wird wie in den Beispielen angegeben mittels Gelpermeationschromatographie (GPC) bzw. in 5 %igen Lösung der Polyvinylacetale in Ethanol gemessen.

Um die Extrusionsfähigkeit der Polyvinylacetalen nicht zu verschlechtern sollte das Molekulargewicht Mw nicht größer als 500000 g/mol und/oder die Lösungsviskosität nicht größer als 300 mPas sein.

Das Molekulargewicht Mw bzw. die Lösungsviskosität stellen makroskopisch am eingesetzten Polyvinylacetal bestimmte Werte dar. Es können daher auch Mischungen aus mehreren Polyvinylacetalen verwendet werden, deren Molekulargewicht Mw bzw. Lösungsviskosität jeweils über und unter den angegebenen Grenzwerten liegen können. Das Abmischen mehrer Polyvinylacetale unter Erhalt eines Gemischs mit den genannten Untergrenzen für Molekulargewicht Mw bzw. Lösungsviskosität ist dem Fachmann bekannt.

Das erhöhte Molekulargewicht bzw. die erhöhte Lösungsviskosität kann durch Einsatz von entsprechenden Polyvinylalkoholen für die Herstellung der erfindungsgemäßen Polyvinylacetale erreicht werden. Bevorzugt weisen die zur Herstellung der Polyvinylacetale eingesetzten Polyvinylalkohole eine Lösungsviskosität von mehr als 35 mPas auf, gemessen als 4% wässrige Lösung. Die Polyvinylalkohole können im Rahmen der vorliegenden Erfindung rein oder als Mischung von Polyvinylalkoholen mit unterschiedlichem Polymerisationsgrad oder Hydrolysegrad eingesetzt werden. Falls Mischungen von Polyvinylalkoholen eingesetzt werden, liegt deren Lösungsviskosität erfindungsgemäß oberhalb von 35 mPas.

Die zur Herstellung der erfindungsgemäß verwendeten Folien erforderlichen Polyvinylacetale werden nach den bekannten Methoden durch Umsetzen von Polyvinylalkoholen mit einem entsprechenden Molgewicht und Restacetatgehalt mit einem oder mehreren Aldehyden erhalten.

Als Polyvinylalkohol können im Rahmen der vorliegenden Erfindung neben Copolymeren aus Vinylalkohol und Vinylacetat auch Terpolymere aus hydrolysierten Vinylacetat/EthylenCopolymeren eingesetzt werden. Diese Verbindungen sind in der Regel zu mehr als 98% hydrolysiert und enthalten 1 bis 10 Gew. auf Ethylen basierende Einheiten (z.B. Typ "Exceval" der Kuraray Europe GmbH).

Als Polyvinylalkohol können im Rahmen der vorliegenden Erfindung weiterhin auch hydrolysierte Copolymere aus Vinylacetat und mindestens einem weiteren ethylenisch ungesättigten Monomer eingesetzt werden.

Es ist möglich, die Acetalisierung mit Aldehyden mit 2-10 Kohlenstoffatomen, bevorzugt mit Acetaldehyd, Butyraldehyd oder Valeraldehyd durchzuführen.

In einer weiteren, dritten Variante der Erfindung weisen die erfindungsgemäß verwendeten Polyvinylacetale durch Vernetzung über Carboxylgruppen, durch Polyaldehyde, Glutardialdehyd oder Glyoxylsäure ein erhöhtes Molekulargewicht und eine erhöhte Lösungsviskosität auf.

Vernetzte Polyvinylacetale sind bevorzugt über eine intramolekulare Vernetzung von Carboxylgruppen-substituierten Polyvinylacetalen erhältlich. Diese können z.B. durch die Coacetalisierung von Polyvinylalkoholen mit Polyaldehyden, Glutardialdehyd oder Glyoxylsäure hergestellt werden.

Die Herstellung von vernetzbaren Polyvinylacetalen und die Vernetzungsreaktion sind z.B. in EP 1527107 B1 und WO 2004/063231 A1 (thermische Selbstvernetzung von Carboxylgruppenhaltigen Polyvinylacetalen), EP 1606325 A1 (mit Polyaldehyden vernetzte Polyvinylacetale), EP 1622946 A1 (mit Glutardialdehyd vernetzte Polyvinylacetale) und WO 03/020776 A1 (mit Glyoxylsäure vernetzte Polyvinylacetale) beschrieben. Auf die Offenbarung dieser Patentanmeldungen wird vollumfänglich Bezug genommen.

Besonders bevorzugt weisen die vernetzbaren Polyvinylacetale die für unsubstituierte Polyvinylacteale bereits beschriebenen Untergrenzen für Molekulargewicht Mw bzw. Lösungsviskosität auf. Die Vernetzung wird makroskopisch über ein erhöhtes Molekulargewicht und/oder über eine erhöhte Viskosität einer ethanolischen Lösung wahrgenommen.

Bevorzugt reagieren durch die Vernetzung 0.001 bis 1 % der ursprünglich im jeweiligen Polyvinylacetal enthaltenen OH-Gruppen ab.

In einer vierten Variante der Erfindung werden die Eigenschaften der erfindungsgemäß verwendeten Polyvinylacetale durch die Acetalisierungsbedingungen bei deren Herstellung eingestellt. Bei der Herstellung von Polyvinylacetalen wird üblicherweise ein Gemisch von Polyvinylalkohol und Aldehyd oder Polyvinylalkohol und einer Säure wie z.B. HC1 vorgelegt und durch Zugabe einer Säure bzw. Aldehyd bei einer Temperatur von 0 bis 20°C unter Ausfallen des der Polyvinylacetals umgesetzt (Fällphase). Die Fällphase beginnt mit der Zugabe der letzten Komponente (Säure oder Aldehyd) und dauert in der Regel zwischen 60 und 360 Minuten, bevorzugt zwischen 60 und 240 Minuten. Die Fällphase endet mit Beginn des Heizens auf die Endtemperatur.

Der Beginn des Heizens ist der Start der Heizphase. Anschließend wird die Reaktion bei einer Endtemperatur von 30 bis 80 °C vervollständigt, wonach die Reaktionsmischung abgekühlt und das Polyvinylacetal abgetrennt u. aufgearbeitet wird. Die Heizphase endet mit Beginn des Abkühlens und dauert in der Regel zwischen 30 und 300 Minuten.

Besonders geeignet für die erfindungsgemäßen Spiegel sind Polyvinylacetale, hergestellt mit Verfahren mit den Schritten
- Vorlage einer Wässrigen Lösung von Polyvinylalkohol und mindestens einem Aldehyd
- Zugabe von einer Säure unter Ausfallen des Polyvinylacetals bei niedriger Temperatur (Fällphase), wobei die Fällphase zwischen 60 und 360 min, bevorzugt zwischen 60 und 240 min andauert

Alternativ kann die Fällphase auch wie folgt durchgeführt werden:
- Vorlage einer Wässrigen Lösung von Polyvinylalkohol und Säure
- Zugabe von mindestens einem Aldehyd unter Ausfallen des Polyvinylacetals bei niedriger Temperatur (Fällphase), wobei die Fällphase zwischen 60 und 360 min, bevorzugt zwischen 60 und 240 min andauert.

Die Zugabe von Säure und Aldehyd kann bei beiden Varianten auf einmal oder in Teilmengen erfolgen.

In beiden Varianten wird danach der folgende Verfahrensschritt durchgeführt (Heizphase):
- Aufheizen des Reaktionsgemisches auf eine erhöhte Temperatur
- Nachheizen bei einer erhöhten Temperatur, wobei die gesamte Heizphase zwischen 30 und 300 min andauert.

Für die vorliegende Erfindung geeignete Polyvinylacetale werden mit einer gegenüber der Heizphase deutlich zeitlich längeren Fällphase wie z.B. in DE 2838025, US 5187217, EP 1384731, WO 2004/005358, EP 0211819 JP 01318009 oder WO 2005 070669 beschrieben, hergestellt. Auf die Offenbarung dieser Patentanmeldungen wird vollumfänglich Bezug genommen. Besonders bevorzugt weisen so die erhaltenen Polyvinylacetale die bereits beschriebenen Untergrenzen für Molekulargewicht Mw bzw. Lösungsviskosität auf.

Für die vorliegende Erfindung besonders geeignete Polyvinylacetale werden in einer fünften Variante der Erfindung durch die Kombination eines Herstellprozesses mit einer langen Fällphase wie in der dritten Variante mit einer Vernetzungsreaktion z.B. durch thermische Selbstvernetzung von Carboxylgruppenhaltigen Polyvinylacetalen, durch Vernetzung des Polyvinylacetals mit Polyaldehyden, Glutardialdehyd oder Glyoxylsäure erhalten. Die Vernetzungsreaktion kann während der Herstellung des Polyvinylacetals (d.h. der Umsetzung von Polyvinylalkohol mit Aldehyd) durch gleichzeitige Zugabe des Aldehyds und des Vernetzungsmittels oder auch in einem separaten Reaktionsschritt wie der Zugabe des Vernetzungsmittels in die Extrusion der weichmacherhaltigen Folie erfolgen. Besonders bevorzugt weisen die so erhaltenen Polyvinylacetale die bereits beschriebenen Untergrenzen für Molekulargewicht Mw bzw. Lösungsviskosität auf.

Unabhängig von der Herstellmethode und von einer Vernetzung weisen die erfindungsgemäß eingesetzten Polyvinylacetale neben den Acetaleinheiten noch aus Vinylacetat und Vinylalkohol resultierende Einheiten auf sowie ggf. weitere Comonomere.

Der Polyvinylacetatanteil der erfindungsgemäß verwendeten Polyvinylacetale liegt bevorzugt unter 14 Gew.%, besonders bevorzugt unter 10 Gew.% bzw. unter 5 Gew.% und insbesondere unter 2 Gew.%. Aus dem Polyvinylalkoholanteil und dem Restacetatgehalt kann der Acetalisierungsgrad rechnerisch ermittelt werden.

Die erfindungsgemäß eingesetzten Folien weisen bevorzugt auch unter humiden Bedingungen im Randbereich Feuchte- bzw. Wassergehalte von maximal 2,3 Gew.-%, maximal 2,0 Gew.%, maximal 1,8 Gew.% und besonders bevorzugt von maximal 1,5 Gew.% auf.

Die Feuchteaufnahme von weichmacherhaltigen Folien auf Basis von Polyvinylacetal wird zusätzlich vom Anteil und der Polarität bzw. der weichmachenden Wirkung des verwendeten Weichmachers bestimmt. Somit kann die Feuchteaufnahme der Folie auch in einfacher Weise über den Weichmacher eingestellt werden.

Bevorzugt weisen die Folien einen Weichmachergehalt im Bereich 18 bis 32 Gew.-%, bevorzugt im Bereich 20 bis 30 Gew.-%, besonders bevorzugt im Bereich 22 bis 28 Gew.-% und insbesondere im Bereich 24 bis 27 Gew.-% auf. Erfindungsgemäß verwendete Folien können einen oder mehrere Weichmacher enthalten.

Erfindungsgemäß besonders geeignet ist einer oder mehrere der folgenden Weichmacher, definiert über die Polarität, ausgedrückt durch die Formel 100 x O/(C+H) kleiner/gleich 9.4 ist, wobei O, C und H für die Anzahl der Sauerstoff-, Kohlenstoff- und Wasserstoffatome im jeweiligen Molekül steht. Die nachfolgende Tabelle zeigt erfindungsgemäß einsetzbare Weichmacher und deren Polaritätswerte nach der Formel 100 x O/(C+H).

| Name | Abkürzung | 100 x O/(C+H) |
|---|---|---|
| Di-2-ethylhexylsebacat | (DOS) | 5,3 |
| Di-isononyladipat | (DINA) | 5,3 |
| 1,2-Cyclohexandicarbonsäurediisononylester | (DINCH) | 5,4 |
| Di-2-ethylhexyladipat | (DOA) | 6,3 |
| Di-2-ethylhexylphthalat | (DOP) | 6,5 |
| Dihexyladipat | (DHA) | 7,7 |
| Dibutylsebacat | (DBS) | 7,7 |
| Di-2-butoxyethylsebacat | (DBES) | 9,4 |
| Triethylenglykol-bis-2-ethylhexanoat | (3G8) | 9,4 |
| Triethylenglykol-bis-n-heptanoat | 3G7 | 10,3 |
| Tetraethylenglykol-bis-n-heptanoat | 4G7 | 10,9 |
| Di-2-butoxyethyladipat | DBEA | 11,5 |
| Di-2-butoxyethoxyethyladipat | DBEEA | 12,5 |

Das Haftungsvermögen von Polyvinylacetalfolien an Glas wird üblicherweise durch die Zugabe von Haftungsregulatoren wie z. B. die in WO 03/033583 A1 offenbarten Alkali- und/oder Erdalkalisalze von organischen Säuren eingestellt. Diese wirken zugleich als basischer Stabilisator welcher die Rückspaltung der Acetalgruppe verhindert. Als besonders geeignet als Stabilisator hat sich Magnesiumacetat herausgestellt. Zudem enthalten Polyvinylacetale aus dem Herstellungsprozess häufig Alkali- und/oder Erdalkalisalze von anorganischen Säuren, wie z.B. Natriumchlorid.

Da diese Salze ebenfalls einen Einfluss auf die Korrosion der Folie haben, ist der Einsatz von weichmacherhaltigen, auf Polyvinylacetal basierenden Folien mit weniger als 70 ppm, besonders bevorzugt mit weniger als 50 ppm und insbesondere mit weniger als 30 ppm Alkalimetallionen zweckmäßig. Dies kann durch entsprechende Waschverfahren des erreicht werden.

Bevorzugt enthält die erfindungsgemäß eingesetzte Folie c) mehr als 5 ppm, bevorzugt mehr als 10 ppm, bevorzugt mehr als 15 ppm, bevorzugt mehr als 20 ppm, bevorzugt mehr als 30 ppm, bevorzugt mehr als 50 ppm, bevorzugt mehr als 70 ppm und besonders bevorzugt mehr als 90 ppm einer oder mehrerer Ionen ausgewählt aus der Gruppe Be, Mg, Ca, Sr, Ba, Ra, Zn und A1. Um unerwünschte Trübung zu vermeiden, sollten andererseits aber nicht mehr als 500 ppm der genannten mehrwertigen Metalle enthalten sein.

Weiterhin kann das Haftungsvermögen der Folie an Glasoberflächen durch den Zusatz von pyrogener oder gefällte Kieselsäure beeinflusst werden. Bevorzugt enthalten die weichmacherhaltigen, auf Polyvinylacetal basierenden Folien 0.001 bis 15 Gew.-%, besonders bevorzugt 0,01 bis 10 Gew.%, insbesondere 0.5 bis 5 Gew.% SiO₂.

Die prinzipielle Herstellung und Zusammensetzung von Folien auf Basis von Polyvinylacetalen ist z. B. in EP 185 863 B1, EP 1 118 258 B1 WO 02/102591 A1, EP 1 118 258 B1 oder EP 387 148 B1 beschrieben.

Die Laminierung der Spiegelelemente erfolgt unter in einer Weise, dass ein blasen- und schlierenfreier Einschluss der Spiegelmaterialien erhalten wird.

In einer Variante der erfindungsgemäßen Spiegel werden die das Sonnenlicht reflektierenden Schichten auf der Abdeckung d) aufgebracht (z.B. durch Aufdampfen, Gasphasenabscheidung, Sputtern oder Nassabscheidung) und durch eine Folie c) mit der Abdeckung a) verklebt.

Die Dicke der auf weichmacherhaltigem Polyvinylacetal basierenden Folien liegt zwischen 0,2 und 2,5 mm.

Die transparente Frontabdeckung besteht in der Regel aus Glas oder PMMA. Die rückwärtige Abdeckung des erfindungsgemäßen Spiegels kann aus Glas, Kunststoff oder Metall oder deren Verbünden bestehen, wobei mindestens einer der Träger transparent sein kann. Es ist ebenfalls möglich, einen oder beide Abdeckungen als Verbundverglasung (d. h. als Laminat aus mindestens zwei Glasscheiben und mindestens einer PVB-Folie) oder als Isolierverglasung mit einem Gaszwischenraum auszuführen. Selbstverständlich ist auch die Kombination dieser Maßnahmen möglich.

Die in den erfindungsgemäßen Spiegeln eingesetzten Schichten b), die das Sonnenlicht reflektieren, müssen keine besonderen Eigenschaften besitzen. Geeignete Materialien umfassen z.B. Silber, Aluminium, Chrom, Gold, die in einer oder mehreren Schichten aufgetragen werden können. Für die Anwendung in Solarkraftwerken einsetzbare Spiegelschichten und deren Herstellung sind Z. B. in WO 2007/108861, US 4422893 oder US 4511688 offenbart.

Es versteht sich, dass die reflektierenden Schichten das eingestrahlte Sonnenlicht möglichst ohne Eigenabsorption reflektieren sollen.

In einer Variante der vorliegenden Erfindung wird ein Schichtkörper aus dem rückwärtigen Träger/Abdeckung d), versehen mit der reflektierenden Schicht b), mindestens einer weichmacherhaltigen, auf Polyvinylacetal basierenden Folie c) und der transparenten Frontabdeckung zusammengelegt und bei erhöhter Temperatur verklebt.

Alternativ kann die reflektierende Schicht b) auf die transparente Frontabdeckung als Träger aufgebracht und mit der der rückwärtigen Abdeckung durch mindestens eine zwischen gelegte, auf weichmacherhaltigem Polyvinylacetal basierende Folie c) verklebt sein.

Zur Laminierung des so erhaltenen Schichtkörpers können die dem Fachmann geläufigen Verfahren mit und ohne vorhergehende Herstellung eines Vorverbundes eingesetzt werden.

So genannte Autoklavenprozesse werden bei einem erhöhten Druck von ca. 10 bis 15 bar und Temperaturen von 130 bis 145 °C über ca. 2 Stunden durchgeführt. Vakuumsack- oder Vakuumringverfahren z.B. gemäß EP 1 235 683 B1 arbeiten bei ca. 200 mbar und 130 bis 145 °C

Vorzugsweise werden zur Herstellung der erfindungsgemäßen Spiegel Vakuumlaminatoren eingesetzt. Diese bestehen aus einer beheizbaren und evakuierbaren Kammer, in denen Verbundverglasungen innerhalb von 30 - 60 Minuten laminiert werden können. Verminderte Drücke von 0,01 bis 300 mbar und Temperaturen von 100 bis 200 °C, insbesondere 130 - 160 °C haben sich in der Praxis bewährt.

Alternativ kann ein so oben beschrieben zusammengelegter Schichtkörper zwischen mindestens einem Walzenpaar bei einer Temperatur von 60 bis 150 °C zu einem erfindungsgemäßen Spiegel verpresst werden. Anlagen dieser Art sind zur Herstellung von Verbundverglasungen bekannt und verfügen normalerweise über mindestens einen Heiztunnel vor bzw. nach dem ersten Presswerk bei Anlagen mit zwei Presswerken.

In einer Variante der Erfindung wird ein zunächst planes dünnes Frontglas, auf dessen Rückseite sich die Spiegelschicht befindet, mit Hilfe der erfindungsgemäßen Folie c) mit einem dickeren gekrümmten Rückglas verklebt, wobei das dünnere Fronglas sich dauerhaft der Krümmung des Rückglases anpasst. Bevorzugt besteht dabei die dünne Frontscheibe aus einem Eisenarmen Glas.

Weiterhin ist Gegenstand der Erfindung die Verwendung weichmacherhaltigen, auf Polyvinylacetal basierenden Folie c) mit einem Polyvinylalkoholanteil des Polyvinylacetals von weniger als 20 Gew.% zur Herstellung von Spiegeln für solarthermische Kraftwerke. Die Spiegel umfassen bevorzugt ein Laminat aus
a) einer transparenten Frontabdeckung
b) einer oder mehreren das Sonnenlicht reflektierenden Schichten
c) mindestens einer weichmacherhaltigen, auf Polyvinylacetal basierenden Folie und
d) einer rückwärtigen Abdeckung

Zur Herstellung der Spiegel können Folien c) mit den beschriebenen bevorzugten Ausführungsformen verwendet werden, insbesondere solche mit einer Kriechneigung, bestimmt an einem Laminat mit dem Aufbau aus 3 mm Floatglas/ 0,76 mm Folie c) / 3 mm Floatglas, bei einer Temperatur von 100°C nach 7 Tagen von weniger als 5 mm.

Erfindungsgemäße Spiegel können in Form von planaren Spiegeln z.B. für solarthermische Kraftwerke oder Fresnel-Kollektoranlagen oder gebogenen Spiegeln z.B. gemäß Fig. 1 in Paraboloid-Kraftwerken als Paraboloidspiegel oder LinienKonzentrator verwendet werden.

### Messmethoden:

Die Bestimmung des Fließverhaltens der Folie erfolgt als Schmelzindex (Massenfluss: MFR) nach ISO 1133 auf einem entsprechenden Gerät, z.B. der Firma Göttfert, Modell MI2. Der MFR-Wert wird bei den entsprechenden Temperaturen von z.B. 100 °C und 140°C mit der 2 mm Düse bei Gewichtsbelastung von 21,6 kg in Gramm pro 10 Minuten (g/10 min) angegeben.

Der Polyvinylalkohol- und Polyvinylalkoholacetatgehalt der Polyvinylacetale wurde gemäß ASTM D 1396-92 bestimmt.

Die Analyse des Metallionengehaltes erfolgte durch Atomabsorptionsspekroskopie (AAS).

Das Molekulargewicht Mw (= Gewichtsmittel) der Polyvinylacetale wurde mittels Gelpermeationschromatographie (GPC) in Eisessig unter Verwendung von RI-Detektoren bestimmt. Die Kalibrierung der Detektoren erfolgte mittels PVB-Eichstandards, deren Absolutwerte mittels statischer Lichtstreuung ermittelt wurden.

Die Messung der Lösungsviskosität der Polyvinylacetale erfolgte gemäß DIN 53015 bei 20°C in einem Gemisch aus 95 Teilen Ethanol u. 5 Teilen Wasser. Der Feststoffgehalt der Viskositätslösung betrug 5 Gew.%.

Die Messung der Lösungsviskosität der Polyvinylalkohole erfolgte gemäß DIN 53015 bei 20°C in Wasser. Der Feststoffgehalt der Viskositätslösung betrug 4 Gew.%.

Der Wasser- bzw. Feuchtegehalt der Folien wird mit der Karl-Fischer-Methode in Gew.%. Zur Simulation des Auffeuchteverhaltens unter humiden Bedingungen wird die Folie zuvor 24h bei 23 °C und 85% rF gelagert. Die Methode kann sowohl an der unlaminierten Folie als auch an einem laminierten Photovoltaikmodul in Abhängigkeit vom Abstand zum Rand der Folie durchgeführt werden.

### Test auf Kriechneigung

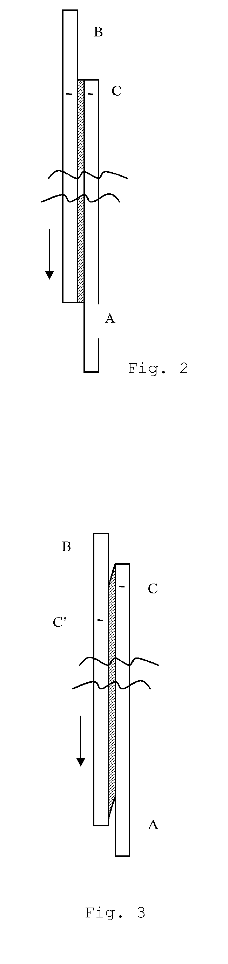

Die Kriechneigung der Folien wird an Testlaminaten bestimmt, welche aus zwei Stücken Floatglas der Dicke 3 mm und Kantenabmessung 150 x 300 mm mit der in Dicke 0.76 mm dazwischen laminierten Folie so hergestellt werden, dass die beiden Gläser in der Länge einen Versatz von 2 cm zueinander aufweisen (A/B in Fig. 2 und 3). Die auf ihre Kriechneigung zu untersuchende Folie wird vor dem Herstellen des Laminates in einem Klima von 23 °C / 23 % rF über Nacht konditioniert.

Die beiden überstehenden Glasabschnitte sind nicht mit Folie bedeckt, d.h. die einlaminierte Zwischenschicht hat lediglich eine Länge von 28 cm. Die Testlaminate werden mit einem Stift von beiden Seiten genau gegenüberliegend mit Querstrichen markiert, anhand derer später der durch Abrutschen resultierende Versatz leicht ausgemessen werden kann. (C in Fig.2) Die Testlaminate werden in einem Heizschrank bei 100 °C in der Vertikalen so aufgestellt bzw. befestigt, dass das vordere, nicht Boden berührende Glas (B in Fig. 2 und 3) unter seinem Eigengewicht frei abgleiten kann, dass heißt, nur durch die Zwischenschichtfolie gehalten wird und auch nur zu dieser Kontakt hat, so dass das Ergebnis nicht durch Reibungseffekte verfälscht wird. Die Testlaminate werden nach Ablauf von 7 Tagen (einer Woche) auf etwaigen Versatz hin untersucht indem der Abstand zwischen den beiden Markierungen mit einem Lineal ausgemessen wird. (C und C' in Fig. 3)

### Beispiele

Es wurden Folien der Dicke 0,76 mm mit den Mischungen der in den nachfolgenden Tabellen aufgeführten Zusammensetzungen hergestellt und als Laminat zwischen 2 Scheiben Weißglas (Optiwhite) der Stärke 3 mm auf ihre Eignung zur Herstellung von Photovoltaikmodulen d.h. ihre Kriechneigung und den elektrische Durchgangswiderstand untersucht.

Es zeigt sich, dass die erfindungsgemäß verwendeten Folien gut zu Spiegeln für Solarthermische Kraftwerke verarbeitet werden können. Demgegenüber zeigen die niedrigen Kriechwerte (= Abgleiten) bei 100 °C eine geringe Fliessfähigkeit bei dieser Temperatur an, sodass ein gegenüber Umwelt- und mechanischen Einflüssen stabiler Spiegel erhalten wird.

Folien mit den beschriebenen Fließfähigkeiten sind zur Herstellung von Spiegeln für Solarthermische Kraftwerke besonders geeignet, da sie kein Abgleiten der metallisch beschichteten Frontscheibe gegenüber der rückwärtigen Scheibe zeigen, sich aber dennoch gut verarbeiten lassen.

Zugleich bewirkt die geringe Feuchteaufnahme der Folien eine verminderte Korrosion der metallischen Spiegelschichten.

Es bedeuten
DINCH 1,2-Cyclohexandicarbonsäurediisononylester
3G8 Triethylenglykol-bis-2-ethylhexanoat
PVB Polyvinylbutyral mit dem angegebenen PVA-Gehalt

Vergleichsbeispiel 1:
100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 56,8 Gewichtsteile n-Butyraldehyd und bei einer Temperatur von 12 °C unter Rühren innerhalb 6 min 75 Gewichtsteile 20 %ige Salzsäure zugegeben, wonach das Polyvinylbutyral (PVB) ausfiel. Die Mischung wurde danach unter Rühren noch 15 min bei 12 °C gehalten, danach innerhalb 80 min auf 69°C erwärmt und bei dieser Temperatur für 120 min gehalten. Das PVB wurde nach Abkühlen auf Raumtemperatur abgetrennt, mit Wasser neutral gewaschen und getrocknet. Es wurde ein PVB mit einem Polyvinylalkoholgehalt von 20,2 Gew.% und einem Polyvinylacetatgehalt von 1,5 Gew.% erhalten.

290 g des so erhaltenen PVB und 100 g Weichmacher 3G8 und 10 g Weichmacher DBEA wurden in einem Labormischer (Hersteller: Brabender, Modell 826801) gemischt. Die erhaltene Mischung wurde zu einer Flachfolie mit einer Dicke von 0,8 mm extrudiert. Die Extrusion erfolgte auf einem Doppelschneckenextruder mit gegenlaufenden Schnecken (Hersteller: Haake, System Rhecord 90), ausgerüstet mit Schmelzepumpe und Breitschlitzdüse. Die Zylindertemperatur des Extruders betrug 220 °C, die Düsentemperatur betrug 150°C.

Vergleichsbeispiel 2:
Bei der Polymersynthese wurden 63,9 Gewichtsteile n-Butyraldehyd eingesetzt. Bei der Folienherstellung wurden 370 g PVB und 130 g Weichmacher DINCH eingesetzt. Das weitere Vorgehen war gemäß Vergleichsbeispiel 1.

Vergleichsbeispiele 3 - 4:
Bei der Polymersynthese wurden 66,3 und 68,4 Gewichtsteile n-Butyraldehyd eingesetzt. Das weitere Vorgehen war gemäß Vergleichsbeispiel 2.

Beispiele 1,2 u. 3:
Bei der Polymersynthese wurden 100 Gewichtsteile des Polyvinylalkohols Mowiol 56-98, (Handelsprodukt von Kuraray Europe GmbH), 1333 Gewichtsteile Wasser und 67,9, 68,4 und 69 Gewichtsteile n-Butyraldehyd eingesetzt. Das weitere Vorgehen war gemäß Vergleichsbeispiel 2.

Beispiele 4 u. 5:
Bei der Polymersynthese wurden 100 Gewichtsteile des Polyvinylalkohols Kuraray Poval 624 (Handelsprodukt von Kuraray Co. Ltd.), 1333 Gewichtsteile Wasser, 100 Gewichtsteile 20 %ige Salzsäure und 70 bzw. 73 Gewichtsteile n-Butyraldehyd eingesetzt. Das weitere Vorgehen war gemäß Vergleichsbeispiel 2.

Vergleichsbeispiel 5:
Bei der Folienherstellung wurde eine Mischung von 333 g PVB aus Vergleichsbeispiel 4 und 37 g PVB aus Beispiel 2 eingesetzt. Das weitere Vorgehen war gemäß Vergleichsbeispiel 2.

Beispiel 6:
Bei der Folienherstellung wurde eine Mischung von 259 g PVB aus Vergleichsbeispiel 4 und 111 g PVB aus Beispiel 2 eingesetzt. Das weitere Vorgehen war gemäß Vergleichsbeispiel 2.

Beispi/el 7:
Bei der Folienherstellung wurde eine Mischung von 185 g PVB aus Vergleichsbeispiel 4 und 185 g PVB aus Beispiel 2 eingesetzt. Das weitere Vorgehen war gemäß Vergleichsbeispiel 2.

Beispiel 8:
Bei der Folienherstellung wurde eine Mischung von 185 g PVB aus Vergleichsbeispiel 4 und 185 g PVB aus Beispiel 3 eingesetzt. Das weitere Vorgehen war gemäß Vergleichsbeispiel 2.

Beispiele 9 - 12:
Bei der Polymersynthese wurden 68,4 Gewichtsteile n-Butyraldehyd sowie zusätzlich 0,02, 0,04, 0,06 und 0,08 Gewichtsteile Glutaraldehyd eingesetzt. Das weitere Vorgehen war gemäß Vergleichsbeispiel 2.

Beispiele 13 - 14:
Bei der Polymersynthese wurden 100 Gewichtsteile des Polyvinylalkohols Mowiol 30-92, (Handelsprodukt von Kuraray Europe GmbH), 1075 Gewichtsteile Wasser, 67,1 Gewichtsteile n-Butyraldehyd, 100 Gewichtsteile 20 %ige Salzsäure und 0,04 bzw. 0,08 Gewichtsteile Glutaraldehyd eingesetzt. Das weitere Vorgehen war gemäß Vergleichsbeispiel 2.

Beispiel 15:
100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 68,4 Gewichtsteile n-Butyraldehyd und bei einer Temperatur von 12 °C unter Rühren innerhalb 15 min 15 Gewichtsteile 20 %ige Salzsäure zugegeben, wonach das Polyvinylbutyral (PVB) ausfiel. Die Mischung wurde danach unter Rühren 60 min bei 12 °C gehalten. Danach wurden innerhalb von 40 min weitere 50 Gewichtsteile 20 %ige Salzsäure zugegeben. Die Mischung wurde danach unter Rühren noch 15 min bei 12 °C gehalten, danach innerhalb 80 min auf 69°C erwärmt und bei dieser Temperatur für 120 min gehalten. Das weitere Vorgehen war gemäß Vergleichsbeispiel 2.

Beispiele 16 - 17:
Die Pause nach Zugabe der ersten Teilmenge der Säure betrug 120 bzw. 180 min. Das weitere Vorgehen war gemäß Beispiel 15.

Beispiel 18:
100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 68,4 Gewichtsteile n-Butyraldehyd und 0,03 Gewichtsteile Glutaraldehyd zugegeben. Bei einer Temperatur von 12 °C wurden unter Rühren innerhalb 6 min 75 Gewichtsteile 20 %ige Salzsäure zugegeben, wonach das Polyvinylbutyral (PVB) ausfiel. Die Mischung wurde danach unter Rühren noch 120 min bei 12 °C gehalten, danach innerhalb 80 min auf 69 °C erwärmt und bei dieser Temperatur fü r 120 min gehalten. Das weitere Vorgehen war gemäß Vergleichsbeispiel 2.

Beispiel 19:
100 Gewichtsteile des Polyvinylalkohols Mowiol 28-99 (Handelsprodukt von Kuraray Europe GmbH) wurden in 1075 Gewichtsteilen Wasser unter Erwärmen auf 90 °C gelöst. Es wurden bei einer Temperatur von 40 °C 68,4 Gewichtsteile n-Butyraldehyd und 0,03 Gewichtsteile Glutaraldehyd zugegeben. Bei einer Temperatur von 12 °C wurden unter Rühren innerhalb 15 min 15 Gewichtsteile 20 %ige Salzsäure zugegeben, wonach das Polyvinylbutyral (PVB) ausfiel. Die Mischung wurde danach unter Rühren 120 min bei 12 °C gehalten. Danach wurden innerhalb von 40 min 50 Gewichtsteile 20 %ige Salzsäure zugegeben. Die Mischung wurde danach unter Rühren noch 15 min bei 12 °C gehalten, danach innerhalb 80 min auf 69°C erwärmt und bei dieser Temperatur für 120 min gehalten. Das weitere Vorgehen war gemäß Vergleichsbeispiel 2.

Beispiele 20 - 21:
100 Gewichtsteile des Polyvinylalkohols Mowiol 30-92 (Handelsprodukt von Kuraray Europe GmbH) wurden in 1075 Gewichtsteilen Wasser unter Erwärmen auf 90 °C gelöst. Es wurden bei einer Temperatur von 40 °C 67,1 Gewichtsteile n-Butyraldehyd und 0,06 Gewichtsteile Glutaraldehyd zugegeben. Bei einer Temperatur von 12 °C wurden unter Rühren innerhalb 6 min 100 Gewichtsteile 20 %ige Salzsäure zugegeben, wonach das Polyvinylbutyral (PVB) ausfiel. Die Mischung wurde danach unter Rühren noch 60 bzw. 120 min bei 12 °C gehalten, danach innerhalb 80 min auf 69°C erwärmt und bei dieser Temperatur für 120 min gehalten. Das weitere Vorgehen war gemäß Vergleichsbeispiel 2.

**Tabelle 1**

| Beispiel | VG 1 | VG 2 | VG 3 | VG 4 | VG 5 |
|---|---|---|---|---|---|
| PVB | | | | | |
| Viskosität PVA 4% (mPa.s) | 27,06 | 27,06 | 27,06 | 27,06 | - |
| Fällphase [min] | 21 | 21 | 21 | 21 | - |
| Heizphase [min] | 200 | 200 | 200 | 200 | - |
| Polyvinylalkoholgehalt [w%] | 20,2 | 16,0 | 15,0 | 14,3 | 14,4 |
| Polyvinylacetatgehalt [w%] | 1,5 | 0,9 | 1,1 | 0,9 | 1,0 |
| Butyral Gehalt [w%] | 78,3 | 83,1 | 83,9 | 84,8 | 84,6 |
| Polyvinylalkoholgehalt [mol%] | 29,1 | 23,5 | 22,2 | 21,2 | 21,4 |
| Polyvinylacetatgehalt [mol%] | 1,1 | 0,7 | 0, 8 | 0,7 | 0, 8 |
| Butyral Gehalt [mol%] | 69,8 | 75,8 | 77,0 | 78,1 | 77,9 |
| Viskosität PVB 5 % (mPa.s) | 81,4 | 68,2 | 70 | 72,9 | 90,1 |
| | | | | | |

| Film | | | | | |
|---|---|---|---|---|---|
| Weichmacher | 3G8/DBEA (10:1) | DINCH | DINCH | DINCH | DINCH |
| Weichmacher [w%] | 27,5 | 26,0 | 26,0 | 26,0 | 26,0 |
| Mw, PVB [g/mol] | 103000 | 103800 | 103000 | 101950 | 106000 |
| MFR 100°C/21,6 kg [mg/10min.] | 165 | 397 | 465 | 378 | 351 |
| Wassergehalt nach Karl-Fischer in Gew.% | 3,09 | 1, 87 | 1,73 | 1, 87 | 1, 67 |
| Abgleiten in mm | 0 | 8,5 | 9 | 7 | 5 |

**Tabelle 2**

| Beispiel | B1 | B2 | B3 | B4 | B5 | B6 |
|---|---|---|---|---|---|---|
| PVB | | | | | | |
| Viskosität PVA 4% (mPa.s) | 56,36 | 56,36 | 56,36 | 55, 92 | 55, 92 | - |
| Fällphase [min] | 21 | 21 | 21 | 21 | 21 | - |
| Heizphase [min] | 200 | 200 | 200 | 200 | 200 | - |
| Polyvinylalkoholgehalt [w%] | 15,6 | 15,0 | 14,1 | 13,5 | 12,7 | 14,5 |
| Polyvinylacetatgehalt [w%] | 2,0 | 2,1 | 1,9 | 5,4 | 5,7 | 1,3 |
| Butyral Gehalt [w%] | 82,4 | 83,0 | 84,0 | 81,1 | 81,6 | 84,2 |
| Polyvinylalkoholgehalt [mol%] | 23,0 | 22,2 | 21,0 | 20,3 | 19,2 | 21,5 |
| Polyvinylacetatgehalt [mol%] | 1,5 | 1,6 | 1,5 | 4,1 | 4,4 | 1,0 |
| Butyral Gehalt [mol%] | 75,5 | 76,2 | 77,6 | 75,6 | 76,4 | 77,5 |
| Viskosität PVB 5 % (mPa.s) | 179,8 | 177,3 | 177,8 | 195,8 | 205,9 | 105,5 |
| | | | | | | |

| Film | | | | | | |
|---|---|---|---|---|---|---|
| Weichmacher | DINCH | DINCH | DINCH | DINCH | DINCH | DINCH |
| Weichmacher [w%] | 26,0 | 26,0 | 26 | 26 | 26 | 26,0 |
| Mw, PVB [g/mol] | 143300 | 144300 | 143775 | 150800 | 150200 | 113500 |
| MFR 100°C/21,6 kg [mg/10min.] | 88 | 83 | 97 | 84 | 97 | 263 |
| Wassergehalt nach Karl-Fischer in Gew.% | 1,79 | 1,76 | 1,7 | 1, 61 | 1,55 | 1, 69 |
| Abgleiten in mm | 1 | 1 | 0 | 1 | 1 | 2 |

**Tabelle 3**

| Beispiel | B7 | B8 | B9 | B10 | B11 | B12 |
|---|---|---|---|---|---|---|
| PVB | - | - | | | | |
| Viskosität PVA 4% (mPa.s) | - | - | 26,8 | 27,06 | 27,06 | 27,06 |
| Fällphase [min] | - | - | 21 | 21 | 21 | 21 |
| Heizphase [min] | - | - | 200 | 200 | 200 | 200 |
| Polyvinylalkoholgehalt [w%] | 14,7 | 14,2 | 14,5 | 14,5 | 14,2 | 14,4 |
| Polyvinylacetatgehalt [w%] | 1,5 | 1,4 | 1,2 | 0,9 | 1,0 | 0,9 |
| Butyral Gehalt [w%] | 83,8 | 84,4 | 84,3 | 84,6 | 84,8 | 84,7 |
| Polyvinylalkoholgehalt [mol%] | 21,8 | 21,1 | 21,5 | 21,6 | 21,2 | 21,3 |
| Polyvinylacetatgehalt [mol%] | 1,1 | 1,1 | 0,9 | 0,7 | 0, 8 | 0,7 |
| Butyral Gehalt [mol%] | 77,1 | 77,8 | 77,6 | 77,8 | 78,1 | 78,0 |
| Viskosität PVB 5 % (mPa. s) | 120 | 120 | 79,8 | 90,9 | 103,7 | 120,5 |
| | | | | | | |

| Film | | | | | | |
|---|---|---|---|---|---|---|
| Weichmacher | DINCH | DINCH | DINCH | DINCH | DINCH | DINCH |
| Weichmacher [w%] | 26, 0 | 26 | 26,0 | 26,0 | 26,0 | 26,0 |
| Mw, PVB [g/mol] | 122300 | 122400 | 111450 | 127200 | 141850 | 159600 |
| MFR 100°C/21,6 kg [mg/10min.] | 172 | 180 | 340 | 227 | 189 | 105 |
| Wassergehalt nach Karl-Fischer in Gew.% | 1, 69 | 1, 64 | 1, 62 | 1, 63 | 1,72 | 1, 67 |
| Abgleiten in mm | 1 | 0 | 4 | 1 | 1 | 0 |

**Tabelle 4**

| Beispiel | B13 | B14 | B15 | B16 | B17 | B18 |
|---|---|---|---|---|---|---|
| PVB | | | | | | |
| Viskosität PVA 4% (mPa.s) | 30,75 | 30,75 | 27,06 | 27,06 | 27,06 | 27,06 |
| Fällphase [min] | 21 | 21 | 115 | 175 | 235 | 126 |
| Heizphase [min] | 200 | 200 | 200 | 200 | 200 | 200 |
| Polyvinylalkoholgehalt [w%] | 11,1 | 11,3 | 14,5 | 15,1 | 14,8 | 15,0 |
| Polyvinylacetatgehalt [w%] | 9,0 | 8, 8 | 1,0 | 0,9 | 0,9 | 1,0 |
| Butyral Gehalt [w%] | 79,9 | 79,9 | 84,5 | 84,0 | 84,2 | 84,0 |
| Polyvinylalkoholgehalt [mol%] | 17,0 | 17,3 | 21,5 | 22,3 | 22,0 | 22,2 |
| Polyvinylacetatgehalt [mol%] | 7,1 | 6,9 | 0,7 | 0,7 | 0,7 | 0,8 |
| Butyral Gehalt [mol%] | 75,9 | 75,8 | 77,7 | 77,0 | 77,3 | 77,0 |
| Viskosität PVB 5 % (mPa.s) | 111,6 | 152,1 | 83,6 | 87,8 | 88,3 | 90,4 |
| | | | | | | |

| Film | | | | | | |
|---|---|---|---|---|---|---|
| Weichmacher | DINCH | DINCH | DINCH | DINCH | DINCH | DINCH |
| Weichmacher [w%] | 26 | 26 | 26,0 | 26 | 26 | 26 |
| Mw, PVB [g/mol] | 141800 | 172400 | 102525 | 103225 | 102075 | 116700 |
| MFR 100°C/21,6 kg [mg/10min.] | 221 | 103 | 156 | 131 | 116 | 253 |
| Wassergehalt nach Karl-Fischer in Gew.% | 1,52 | 1,54 | 1,64 | 1,68 | 1,7 | 1,78 |
| Abgleiten in mm | 3 | 0 | 1 | 0 | 0 | 2 |

**Tabelle 5**

| Beispiel | B19 | B20 | B21 |
|---|---|---|---|
| PVB | | | |
| Viskosität PVA 4% (mPa.s) | 27,06 | 30,75 | 30,75 |
| Fällphase [min] | 175 | 106 | 166 |
| Heizphase [min] | 200 | 200 | 200 |
| Polyvinylalkoholgehalt [w%] | 14,7 | 11,8 | 11,6 |
| Polyvinylacetatgehalt [w%] | 1,1 | 9,2 | 9,6 |
| Butyral Gehalt [w%] | 84,2 | 79,0 | 78,8 |
| Polyvinylalkoholgehalt [mol%] | 21,8 | 18,0 | 17,8 |
| Polyvinylacetatgehalt [mol%] | 0,8 | 7,2 | 7,5 |
| Butyral Gehalt [mol%] | 77,4 | 74,8 | 74,7 |
| Viskosität PVB 5 % (mPa.s) | 102,6 | 131,6 | 124,2 |
| | | | |

| Film | | | |
|---|---|---|---|
| Weichmacher | DINCH | DINCH | DINCH |
| Weichmacher [w%] | 26 | 26 | 26 |
| Mw, PVB [g/mol] | 115400 | 160500 | 155400 |
| MFR 100°C/21,6 kg [mg/10min.] | 106 | 121 | 181 |
| Wassergehalt nach Karl-Fischer in Gew.% | 1, 68 | 1,54 | 1,5 |
| Abgleiten in mm | 0 | 0 | 1 |

## Patentansprüche

1. Spiegel für solarthermische Kraftwerke, umfassend ein Laminat aus
a) einer transparenten Frontabdeckung
b) einer oder mehreren das Sonnenlicht reflektierenden Schichten
c) mindestens einer weichmacherhaltigen, auf Polyvinylacetal basierenden Folie und
d) einer rückwärtigen Abdeckung
**dadurch gekennzeichnet, dass** die weichmacherhaltige, auf Polyvinylacetal basierende Folie c) Polyvinylacetal mit einem Polyvinylalkoholanteil von weniger als 20 Gew.% enthält.

2. Spiegel für solarthermische Kraftwerke nach Anspruch 1 **dadurch gekennzeichnet, dass** die Polyvinylacetale ein Molekulargewicht Mw von mehr als 110000 g/mol aufweisen.

3. Spiegel für solarthermische Kraftwerke nach Anspruch 1 oder 2 **dadurch gekennzeichnet, dass** die Folie c) eine Kriechneigung, bestimmt an einem Laminat mit dem Aufbau aus 3 mm Floatglas/ 0,76 mm Folie c) / 3 mm Floatglas, bei einer Temperatur von 100°C nach 7 Tagen von weniger als 5 mm aufweist.

4. Spiegel für solarthermische Kraftwerke nach einem der Ansprüche 1 bis 3 **dadurch gekennzeichnet, dass** die Polyvinylacetale über Carboxylgruppen, durch Polyaldehyde, Glutardialdehyd oder Glyoxylsäure vernetzt sind.

5. Spiegel für solarthermische Kraftwerke nach Anspruch 4 **dadurch gekennzeichnet, dass** durch die Vernetzung 0.001 bis 1 % der ursprünglich im Polyvinylacetal enthaltenen OH-Gruppen abreagieren.

6. Spiegel für solarthermische Kraftwerke nach einem der Ansprüche 1 bis 5 **dadurch gekennzeichnet, dass** die weichmacherhaltige, auf Polyvinylacetal basierende Folie c) mehr als 5 ppm Magnesiumionen enthält.

7. Spiegel für solarthermische Kraftwerke nach einem der Ansprüche 1 bis 6 **dadurch gekennzeichnet, dass** das Polyvinylacetal einen Polyvinylacetatanteil von unter 14 Gew.-% aufweist.

8. Spiegel für solarthermische Kraftwerke nach einem der Ansprüche 1 bis 7 **dadurch gekennzeichnet, dass** die weichmacherhaltigen, auf Polyvinylacetal basierenden Folien c) einen Weichmachergehalt von 18 bis 32 Gew.-% aufweisen.

9. Spiegel für solarthermische Kraftwerke nach einem der Ansprüche 1 bis 8 **dadurch gekennzeichnet, dass** als Weichmacher eine oder mehrere Verbindungen aus der Gruppe Di-2-ethylhexylsebacat, Di-2-ethylhexyladipat, Diisononyladipat, Dihexyladipat, Dibutylsebacat, Di-2-butoxy-ethylsebacat, Triethylenglykol-bis-2-ethylhexanoat und 1,2-Cyclohexandicarbonsäurediisononylester eingesetzt wird.

10. Spiegel für solarthermische Kraftwerke nach einem der Ansprüche 1 bis 9 **dadurch gekennzeichnet, dass** die weichmacherhaltige, auf Polyvinylacetal basierende Folie 0.001 bis 15 Gew.-% SiO₂ enthält.

11. Verwendung von weichmacherhaltigen, auf Polyvinylacetal basierenden Folien mit einem Polyvinylalkoholanteil des Polyvinylacetals von weniger als 20 Gew.% zur Herstellung von Spiegeln für solarthermische Kraftwerke.
